# EUROPEAN PATENT SPECIFICATION

(11) **EP 2 841 478 B1**
(45) Date of publication and mention of the grant of the patent: **05.04.2017**
(21) Application number: 13719529.3
(22) Date of filing: 26.04.2013
(51) Int. Cl.: C08G 8/00, C08G 12/00, C08L 61/00, C08L 61/12, C08L 61/14, C04B 26/00, C08K 5/00

(54) **PROCESS FOR THE PREPARATION OF A PHENOL-FORMALDEHYDE RESIN HAVING A LOW AMOUNT OF FREE FORMALDEHYDE, A PHENOL-FORMALDEHYDE RESIN RESULTING FROM THIS PROCESS, AND THE USE OF THIS RESIN AS A BINDER FOR MINERAL WOOL INSULATION PRODUCTS**
VERFAHREN ZUR HERSTELLUNG EINES PHENOL-FORMALDEHYDHARZES, MIT GERINGEM FREIEM FORMALDEHYDGEHALT, PHENOL-FORMALDEHYDHARZ AUS DIESEM VERFAHREN UND DIE VERWENDUNG DIESES HARZES ALS BINDEMITTEL FÜR MINERALWOLLE-DÄMMSTOFFE
PROCÉDÉ POUR LA PRÉPARATION D'UNE RÉSINE PHÉNOL-FORMALDÉHYDE AYANT UNE FAIBLE QUANTITÉ DE FORMALDÉHYDE LIBRE, UNE RÉSINE DE PHÉNOL-FORMALDÉHYDE RÉSULTANT DE CE PROCÉDÉ ET L'UTILISATION DE CETTE RÉSINE COMME LIANT POUR DES PRODUITS D'ISOLATION EN LAINE MINÉRALE

(30) Priority: 27.04.2012 EP 12165944
(43) Date of publication of application: 04.03.2015
(73) Proprietor: URSA Insulation, S.A., 28004 Madrid (ES)
(72) Inventor: CASTRO-CABADO, Maria Mercedes, E-28050 Madrid (ES); SANCHEZ PERUCHA, Alejandro, 04157 Leipzig (DE); AZNAR ÉCIJA, Ana Isabel, E-43004 Tarragona (ES); CASADO DOMINGUEZ, Arturo Luis, E-28680 Paracuellos de Jarama Madrid (ES)
(74) Representative: Hoffmann Eitle
(86) International application number: PCT/EP2013/058727
(87) International publication number: WO 2013/160449

(56) References cited:
- DE-A1- 2 756 848
- GB-A- 612 525
- GB-A- 1 584 800
- US-A- 2 489 336
- US-A- 3 345 249
- US-A- 4 172 042

## Description

The present invention relates to a method of reducing the content of free formaldehyde in phenol-formaldehyde resins thereby producing a phenol-formaldehyde resin having a low amount of free formaldehyde as well as the use of the resulting resin as a binder in the manufacture of mineral wool insulation products of low formaldehyde emissions.

### State of the Art

The mineral wool products have traditionally being manufactured by welding glass fibers by means of phenol-formaldehyde resins, profiting from a relatively low cost and the good mechanical properties, stability and water resistance granted to the finished products. Most common phenol-formaldehyde resins for mineral wool production are *resols* manufactured by condensation of formaldehyde and phenol catalyzed by strong alkalis and using a large molar excess of the formaldehyde. These resins contain from about 45 to about 55 % weight solid content, and from about 2 to 8 weight % of free formaldehyde.

For a good processability, these phenol-formaldehyde resins should have a good stability, good dilutability with water, normally above 20 times measured by the method ISO 8989 method, a viscosity below 100 mPa.s to facilitate the application on the glass fibers, and a suitable curing rate, between 3-15 minutes measured by the B-time method ISO 8987 method. Preferably, the resins shall have a pH greater than 7 to avoid or minimize potential corrosion issues on carbon steel equipment.

The main drawback of the phenol-formaldehyde resins is the slow release of formaldehyde in finished products to the environment, contributing to worsen the indoor air quality; hence there is a great desire of producing phenol-formaldehyde resins with a low free FA content, helping to reduce emissions of formaldehyde from mineral wool products. Different methods to reduce free formaldehyde in phenolic resins have been described.

One group of methods refers to the use of formaldehyde scavengers which reacts with the free formaldehyde in the resin. For instance, EP 0 148 050 A1 describes the use of urea as formaldehyde scavenger by formation of formaldehyde-urea condensates. This method is useful to decrease the level of free formaldehyde in phenol-formaldehyde resins. Nevertheless the formed adducts can reversibly regenerate free formaldehyde during the curing process of the resin and/or the after curing due to the aging. Furthermore, the US 2011/111226 A1 describes the use of substances with active methylene groups as formaldehyde scavengers. These methods are also useful to the goal of reducing free formaldehyde. However, the required reaction conditions are harsh, leading to higher condensation in the resin which may then suffer from reduced stability and water dilutability.

A second set of solutions consists of the use of a compound able to form condensates with both phenol and formaldehyde.

For example, WO 2008/043961 A1 describes the use of monoethanolamine that reacts with free formaldehyde and phenol via Mannich reaction. It is described that this method decreases the free formaldehyde in the resin. However, it requires the use of relatively high temperatures, normally around 60 °C, what makes the resin condensates to acquire a high degree of condensation during the process. Consequently, the thermal stability of the resins is seriously compromised and they tend to generate precipitates over time. Further, their dilutability in water is also significantly reduced, complicating their processability in the manufacturing plants. A way to increase the stability of such high condensed resins would be to reduce their pH by means of organic acids such as sulfamic acid. However, such low pH has negative effects on carbon steel plant installations due to corrosion and requires expensive investments to upgrade installations with stainless steel materials.

Furthermore, the method described in WO 2012/25699 A1 relates to a method for reducing free formaldehyde in resins using glycine as formaldehyde scavenger. The latter overcomes the need of using the acid to achieve resin stabilization but the process still requires relatively high reaction temperatures making the process difficult to undertake in glass wool manufacturing plants.

A third group of solutions consist of the treatment of the mineral wool product with formaldehyde scavengers which reacts with the free formaldehyde being issued from the fleece. For instance, the method described in WO 2008/005635 A2 consists of the use of sodium bisulfite, sodium metabisulfite and tetraethylenepentamine as formaldehyde scavengers. Another method disclosed in WO 2011/148076 A1 consists of the use of dihydrazides as formaldehyde scavengers. These methods can decrease the measured emissions of formaldehyde from mineral wool products although the efficiency is limited. Additionally, the use of hydrazides is significantly limited due to its hazardousness, difficulty in handling and price.

US 2,489,336 A relates to condensation products of mononuclear monohydric phenols, formaldehyde, and mononuclear dihydric phenols. According to the claims, US 2,489,336 A discloses a method wherein a water soluble phenolic resin glue composition is produced by: (a) reacting mononuclear monohydric phenol with formaldehyde in an aqueous alkaline solution until a low condensed polymer is formed, (b) adding a mononuclear dihydric phenol together with non-volatile alkali to maintain the mixture at a pH between 9.0 and 13.0, and (c) condensing the reaction mixture by heating until the resulting product has a viscosity between 30 and 200 revolutions per minute as determined on a Stormer viscosimeter at 70 °F, using a 500 gram weight. US 2,489,336 suggests using a temperature of the order of 75 to 80 °C in the heating during step (c).

GB 612 525 A describes condensation products produced from resorcinol and formaldehyde. The condensation products are to be used as water-soluble resin glues to effectively bond a plurality of wood surfaces to each other.

US 3,345,249 A refers to condensation products prepared by reacting a polyhydroxynaphthalene with an aldehyde. The condensation products have utility, e.g. , as resin adhesives in the bonding of wood and wood products such as plywood, flake board, particle board, paper, plastic, rock wool, and the like.

GB 1 584 800 A discloses a method of making a binder which comprises a modified resol phenol-formaldehyde resin, comprising effecting condensation reactions between phenol, formaldehyde, sodium hydroxide, one or more resorcinols, and urea, or dicyandiamide, or melamine at a temperature above 50 °C.

According to claim 1, US 4,172,042 A discloses a binder to be applied onto mineral wool, the binder being modified resol phenol-formaldehyde resin based on phenol, formaldehyde, sodium hydroxide, a water-proofing additive and a nitrogenated compound. The water-proofing additive may be resorcinol or a resorcinol derivative. Phenol and formaldehyde are reacted in a polycondensation reaction and, after a certain time, alkyl resorcinol is added to the reactor. The polycondensation is continued at a temperature of 50 to 70 °C.

DE 27 56 848 A1 describes a process including a first polycondensation step wherein phenol and formaldehyde are reacted. The reaction product is then reacted *inter alia* with alkyl resorcinol. The reaction temperature is 50 to 70 °C.

### Description of the invention

It is an object of the present invention to provide a new process for reducing the content of free formaldehyde in a phenol-formaldehyde resin to an amount of lower than 0.5 weight % measured by method ISO 11402. This process has the advantage that it effectively reduces the content of free formaldehyde in the phenol-formaldehyde resin but, at the same time, does not significantly impact the stability, dilutability with water, viscosity and reactivity of the phenol-formaldehyde-resin used as starting material. Moreover, the process can be undertaken with good efficiencies at a pH in the range of 7 to 10 which is advantageous in industrial production.

In contrast to the formaldehyde reducing processes described in the art, the process of the present invention is particularly valuable in the manufacture of binders used for glass wool insulation products because:
(1) the treatment of the phenol-formaldehyde resin involves easy to handle and inexpensive chemicals, and can be undertaken at around ambient temperature at a suitable rate. Consequently, the process can be done at the own glass wool manufacturing premises without major investments, and the resulting resin can be consumed *in situ* avoiding long storage and transportation stability requirements for the resin; and
(2) the unwanted corrosion damage of carbon steel production equipment can be minimized due to the high pH of the resulting resin.

It is a further object of the present invention to provide a novel modified phenol-formaldehyde resin that has a low amount of free formaldehyde, is non-corrosive, shows excellent reactivity and excellent suitability for its use as a binder of mineral wool products.

According to the present invention, the process for reducing the content of free formaldehyde in a phenol-formaldehyde resin comprises the step of treating a phenol-formaldehyde resin with a phenol derivative or aniline derivative, wherein both the phenol-formaldehyde resin used as the starting material and the resulting phenol-formaldehyde resin obtained after said step of contacting the starting material with said phenol derivative or aniline derivative have the following characteristics: a pH of 7 or above, in particular 7-10, a dilutability of more than 20 times in demineralized water, a viscosity lower than 100 mPa.s at 20 °C, and a curing B-time between 3-15 minutes, wherein the process does not include a step wherein the temperature is raised above 40 °C.

In a further aspect the present invention is directed to the use of a phenol derivative or aniline derivative of the formula A as defined below for reducing the content of free formaldehyde in a phenol-formaldehyde resin wherein the phenol-formaldehyde resin before and after the treatment with the phenol derivative or aniline derivative of the formula A has the following properties:
- the pH is in the range of 7 to 10;
- the dilutability is more than 20 times in demineralized water at 20 °C;
- the viscosity is below 100 mPa.s at 20 °C.

The phenol-formaldehyde resin that is used as a starting material for the process of the present invention is a *resol* produced by condensation of formaldehyde and phenol in a formaldehyde:phenol molar ratio greater than 1.1, preferably greater than 1.8 and more preferably greater than 2. Usually, the formaldehyde:phenol molar ratio in the phenol-formaldehyde used as starting material in the process of the present invention is not greater than 3. The condensation process for preparing the phenol-formaldehyde resin starting materials is usually catalyzed by NaOH, KOH or Ca(OH)₂ most preferably NaOH. The pH of the phenol-formaldehyde resin starting material is usually from 7 to 10.

According to a preferred embodiment, the phenol-formaldehyde resin used as a starting material is an aqueous solution composed of from 5 to 70 weight %, more preferable from 40 to 65 weight %, and most preferably from 45 to 55 % weight of said phenol-formaldehyde *resol* condensates.

According to an even more preferred embodiment, the phenol-formaldehyde resin used as a starting material in the present invention contains from about 5 to 8.5% weight of free formaldehyde, determined by the method ISO 11402. Such resin is characterized in that it can be diluted with more than 10 parts of demineralized water, in particular more than 20 parts, determined by the method ISO 8989. This is normally referred to as 'infinite' dilutability in water. Particular examples of preferred phenol-formaldehyde resins used as a starting material in the present invention are Bakelite PF 1230V from Momentive or Borofen B-1606A supplied by Fenolit.

The phenol derivative or aniline derivative used in the process according to the present invention is any phenol derivate or aniline derivative according to formula A, where X is selected from the list composed of OH, OR, NH₂, NHR, NRR' ; Y is independently selected from the list composed of OH, OR, NH₂, NHR, NRR'; R, R' and R'' are similar or different C₁₋₈H₂₋₁₆Z hydrocarbon group; Z is independently selected from the list of H, OH, OR, NH₂, NHR, NRR'; n = 0 to 4, m = 0 to 4, with the proviso that n + m is 0 to 4; and Y/R'' is/are in positions 2 to 5 relative to X, with the proviso that X is not OH or NH₂ when n=m=0.

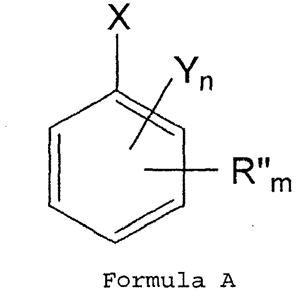

It is preferred to use a phenol derivative according to formula A, wherein X is selected from the list composed of OH and OR; Y is independently selected from the list composed of OH and OR; R, R' and R'' are similar or different C₁₋₈H₂₋₁₆Z hydrocarbon groups; Z is independently selected from the list of H, OH, OR, NH₂, NHR, NRR'; n = 0 to 4, m = 0 to 4, with the proviso that n + m is 0 to 4; and Y/R" is/are in positions 2 to 5 relative to X, with the proviso that X is not OH when n=m=0.

Among the above-mentioned phenol derivatives which are preferably used in the process of the present invention, alkyl derivatives of resorcinol have been shown to be particularly suitable. The alkyl derivatives of resorcinol are phenol derivatives according to formula A, wherein X is OH, Y is OH, n = 1, X and Y are arranged in meta position to each other, and R'' is a C₁₋₈H₂₋₁₆Z group, wherein Z is H, and m = 1 to 2.

According to another preferred embodiment, it is used a phenol derivative selected from resorcinol, hydroquinone, cresol and catechol. The most preferred phenol derivative is resorcinol due to the suitable condensation rate with formaldehyde, relative ease dosing and handling, non toxicity and affordable cost.

According to the process of the present invention, the process comprises the step of contacting the phenol-formaldehyde resin used as starting material with a solution of the phenol derivative or aniline derivative, e.g. resorcinol, in a suitable amount. The amount of phenol derivative and aniline derivative is not particularly limited. It is however preferred to use from 0.25 to 2 mol of phenol derivative or aniline derivative per mol of free formaldehyde present in the starting resin, more preferably from about 0.4 to 1 mol of phenol derivative or aniline derivative per mol of free formaldehyde present in the starting resin. This amount of phenol derivative or aniline derivative is very suitable to achieve the conversion of the free formaldehyde in the phenol-formaldehyde resin without deteriorating the dilutability of the phenol-formaldehyde resin in water.

When resorcinol and/or alkyl derivatives thereof are used as phenol derivative, the inventors surprisingly found a molar ratio of phenol-derivative:free formaldehyde of 1.0 to 0.4 particularly suitable, preferably it is used a molar ratio of 0.9 to 0.6.

In case of resorcinol, the inventors surprisingly found a molar ratio of resorcinol:free formaldehyde of 0.8 to be particularly suitable.

The temperature at which the process according to the present invention is to be carried out is preferably in the range of 5 to 30 °C, and most preferably from 20 to 30 °C. At a temperature range of 15 to 30 °C, and in particular a temperature range of 20 to 30 °C, the reaction of the phenol derivative or aniline derivative as defined above with free formaldehyde contained in the phenol-formaldehyde resin used as starting material occurs at reasonable rate without deteriorating the dilutability in water of the resin.

The temperature during the process for reducing the content of free formaldehyde in a phenol-formaldehyde resin should not be raised above a temperature of 40°C to avoid deterioration of the characteristics of the resulting phenol-formaldehyde resin, such as viscosity and dilutability. In view of the properties of the resulting resin the process of the present invention does not include a process step wherein the temperature is raised above 40 °C, and preferably not above 30°C.

Furthermore, the contact period is not particularly limited in the process of the present invention. However, a suitable time of contacting the phenol-formaldehyde resin with the phenol derivative or aniline derivative is 1 to 180 minutes, more preferable 10 and 120 minutes, and most preferably 30 to 100 minutes.

The phenol-formaldehyde resin that is obtained by the process according to the present invention is a modified phenol-formaldehyde resin. "Modified" means that it is a phenol-formaldehyde resin wherein the phenol derivative or aniline derivative is incorporated into the resin thereby resulting in a phenol-formaldehyde resin that is modified with the phenol derivative or aniline derivative. This means, the resulting resin is essentially composed of condensates produced upon condensation of phenol and formaldehyde, condensates produced upon condensation of phenol derivative or aniline derivative according to formula A and formaldehyde, and condensates produced upon condensation of phenol, formaldehyde and the phenol derivative or aniline derivative according to formula A. The modified phenol-formaldehyde resin resulting from the process of the present invention has a content of free formaldehyde of below 0.5 weight %, as measured according to the ISO 11402 method. Furthermore, the phenol-formaldehyde resin obtained by the process according to the present invention has an excellent dilutability in water, measured by ISO 8989 method, of more than 20 times in demineralized water at 20 °C. The resulting modified phenol-formaldehyde resin has a low viscosity, in particular below 100 mPa.s at 20 °C and a resin concentration having a solid content of 40 wt.-% (e.g. measured with a Brookfield viscometer, spindle 1, 60 rpm), an excellent curing behavior in terms of B-time, as determined by the ISO 8987 method. More particularly, the B-time of the resulting resin is in the range of 3 to 15 minutes which is in the same range compared to the untreated phenol-formaldehyde resin, i.e. the phenol-formaldehyde resin used as starting material. Finally, the resulting phenol-formaldehyde resin shows negligible impact on corrosion of carbon steel equipment down the manufacturing line due to its pH of 7 or higher, in particular its pH in the range of 7-10.

A particularly suitable mode of carrying out the process of the present invention for reducing the content of free formaldehyde in a phenol-formaldehyde resin comprises the step of contacting, at a temperature of 20 to 30°C, a phenol-formaldehyde resin used as the phenol-formaldehyde resin starting material with resorcinol, wherein the molar ratio of the resorcinol to free formaldehyde contained in the phenol-formaldehyde resin used the starting material is of 0.9 to 0.6, most preferably 0.8. This process has the advantage that relevant properties of the phenol-formaldehyde resin used as the starting material are maintained. More specifically, in the process of the present invention both the phenol-formaldehyde resin used as the starting material and the resulting phenol-formaldehyde resin obtained after process of the present invention have the following characteristics: a pH of 7 or higher, viscosity below 100 mPa.s at 20 °C, and a dilutability of more than 20 times in demineralized water.

In a further embodiment of the present invention the process as defined above may contain an additional step of treating the phenol-formaldehyde resin with an oxidizing agent such as hydrogen peroxide, ammonium persulfate, sodium percarbonate, sodium perborate, peracetic acid or performic acid. Such an oxidizing agent has the effect of reducing free formaldehyde from the resin. The treatment using an oxidizing agent may be carried out before or after the step of treating the resin with the phenol derivative or aniline derivative as described above.

The phenol-formaldehyde resin as obtained by the process according to the present invention described above is to be used for the preparation of a binder composition for fibrous substrates, particularly mineral wool fibers. Such a binder composition for mineral wool fibers comprises the phenol-formaldehyde resin as obtained by the process according to the present invention and at least one additive such as, but not limited to, urea, latent acid catalysts such as ammonium sulfate, sodium bisulfite, hydrophobizing agent such as silicones, de-dusting agent such as paraffin oils, adhesion promoter agent such as silanes, fiber softener, dyes and corrosion inhibitors. It is preferred that said composition additionally comprises of at least one chain extender such as, but not limited to, sugars, molasses, starches and modified starches, lignosulfonates or tannins. The binder composition for mineral wool fibers is applied onto mineral wool by e.g. spraying or impregnating the fibers, with subsequent heat treatment of the so-prepared mineral fiber product. The heat treatment is common in the art and for curing of the binder temperatures of more than 150°C are usually applied.

The resulting mineral wool fiber products show a formaldehyde emission below 20 µg/m³ (method ISO 16000-3), more preferable lower than 15 µg/m3 and most preferable lower than 10 µg/m³.

The mineral wool product may comprise at least additional facing made of paper, aluminum, glass veil or mixtures thereof. The mineral wool obtained may be used for thermal or acoustic insulation purposes in buildings, conducts, particularly air-conditioning conducts, electrical appliances, ships, aircrafts and spaceships.

### Example

Methods as referred to in the present specification.

### a. Method for measuring free formaldehyde in a phenol-formaldehyde resin.

The free formaldehyde content of the resin is measured according to the international standard ISO 11402, version year 2004(E), using the hydroxylamine hydrochloride procedure.

This method involves the following general principle: The formaldehyde present in the resin is converted to the oxime with hydroxylamine hydrochloride. Then the hydrochloric acid formed during this reaction is determined by potentiometric back-titration, using a sodium hydroxide solution.

### b. Method for measuring the dilutability

Resin dilutability in demineralized water is measured at 20°C according to the international standard ISO 8989 method, version year 1995(E). Resin dilutability is a measure of the mass of water needed to obtain turbidity in the liquid resin. This method involves adding water to the resin until turbidity persists for a minimu of 30 s after agitation.

### c. Method for measuring the viscosity

The viscosity of the starting phenol-formaldehyde resin and in the phenol-formaldehyde resin obtained by the process according to the invention is measured at 20 °C using a Brookfield viscosimeter, spindle 1, 60 rpm. The viscosity as referred to in the present invention is based on a resin concentration having a solid content of 40 wt.-% in water.

### d. Method for measuring the curing B-time

Curing B-Time of the resin is measured at 130°C according to the international standard ISO 8987, version year 2005(E). In this method, the condensation of the phenol-formaldehyde resin is carried out to the B-stage in one heated test plate. The B-transformation time point is reached when a stirring rod is briefly raised from the resin and resin threads from the rod break.

### Exemplified process according to the present invention

A 1-L round bottom flask equipped with a mechanical stirred and a thermostatic bath, was charged with 150 grams of phenol-formaldehyde resin Borofen B-1606A supplied by Fenolit, of 47 weight % solids. The content of free formaldehyde of this resin measured with the method ISO 11402 was 6.9 weight % (0.345 mol). 30 grams (0.28 mol) of solid resorcinol previously dissolved in 45 mL of water. The mixture is stirred at 25 °C for 60 minutes obtaining a reddish solution of resin A. The main properties of the produced resin are in the Table 1.

**Table 1: Properties of phenol-formaldehyde resins with reduced content of free formaldehyde**

| | Untreated Resin | Resin A |
|---|---|---|
| Free formaldehyde (% weight) (1) | 6, 9 (ref) | 0,48 |
| Dilutability in water (parts) (2) | >20 | >20 |
| pH | 8.9 | 7.8 |
| Corrosion carbon steel (mm/year) | < 0.1 | < 0.1 |
| Viscosity (mPa.s) (3) | 30 | 45 |
| B-time (min) (4) | 7.5 | 7.3 |
| Modulus of impregnated glass paper (N.m²) ⁽⁵⁾ | 628 | 746 |
| Modulus of impregnated glass paper after aging (N.m²) ⁽⁶⁾ | 524 | 658 |

| | | |
|---|---|---|
| (1) ISO 11402 (2) ISO 8989 (3) Measured at 20 °C using a Brookfield viscometer, spindle 1, 60 rpm (4) ISO 8987 (5) Concentration of impregnation resin solution is 20% weight solids. The impregnation resin solution contains 2.6% weight ammonium sulfate based on dry mixture weight resin plus ammonium sulfate. Cured 3 min at 170 °C (6) Method in (5) followed by immersion in water for 10 min at 85 °C, then air-dried. (7) Corrosion carbon steel is measured with the resin according to ASTM G1-03 method. | | |

As it may be taken from the above table, in the particular case of resorcinol, the inventors have surprisingly found that the mechanical properties, particularly elongation modulus, granted to impregnated glass fibers with the new modified phenol-formaldehyde resin that is obtained by the process according to the present invention are better than in the untreated phenol-formaldehyde resin.

## Claims

1. A process for reducing the content of free formaldehyde in a phenol-formaldehyde resin, comprising the step of contacting a phenol-formaldehyde resin used as the phenol-formaldehyde resin starting material with at least one phenol derivative or aniline derivative of the formula A, 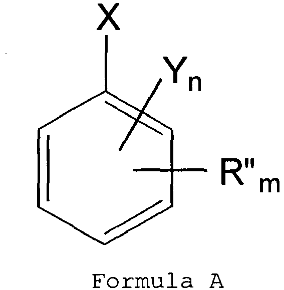 wherein X is selected from the list composed of OH, OR, NH₂, NHR, NRR'; Y is independently selected from the list composed of OH, OR, NH₂, NHR, NRR'; R, R' and R" are similar or different C₁₋₈H₂₋₁₆Z hydrocarbon groups; Z is independently selected from the list of H, OH, OR, NH₂, NHR, NRR'; n = 0 to 4, m = 0 to 4, with the proviso that n + m is 0 to 4; and Y/R" is/are in positions 2 to 5 relative to X, with the proviso that X is not OH or NH₂ when n=m=0, wherein
both the phenol-formaldehyde resin used as the starting material and the resulting phenol-formaldehyde resin obtained after said step of contacting the starting material with said phenol derivative or aniline derivative have the following characteristics: a pH of 7 or higher, viscosity below 100 mPa.s at 20 °C, and a dilutability of more than 20 times in demineralized water,
wherein the process does not include a process step wherein the temperature is raised above 40 °C.

2. The process according to claim 1 wherein X is selected from the list composed of OH and OR; Y is independently selected from the list composed of OH and OR; R, R' and R" are similar or different C₁₋₈H₂₋₁₆Z hydrocarbon groups; Z is independently selected from the list of H, OH, OR, NH₂, NHR, NRR'; n = 0 to 4, m = 0 to 4, with the proviso that n + m is 0 to 4; and Y/R" is/are in positions 2 to 5 relative to X, with the proviso that X is not OH when n=m=0.

3. The process according to claim 1 or 2 wherein the phenol derivative is one or more selected from resorcinol, hydroquinone, cresol or catechol.

4. The process according to any one of claims 1-3 wherein the step of contacting said phenol-formaldehyde resin with said phenol derivative or aniline derivative is carried out a temperature of 20 to 30 °C.

5. The process according to any one of the previous claims wherein the time of the step of contacting said phenol-formaldehyde resin with said phenol derivative or aniline derivative is 1 to 180 minutes.

6. The process according to any one of the previous claims wherein the amount of phenol derivative or aniline derivative is from about 0.25 to 2 mol of phenol derivative or aniline derivative per mol of free formaldehyde present in the starting phenol-formaldehyde resin.

7. The process according to any one of the previous claims wherein the process contains an additional step of treating the phenol-formaldehyde resin with an oxidizing agent such as hydrogen peroxide, ammonium persulfate, sodium percarbonate, sodium perborate, peracetic acid or performic acid.

8. A phenol-formaldehyde resin modified by a phenol derivative or aniline derivative according to formula A, **characterized in that**:
- the free formaldehyde content is below 0.5 weight % determined by ISO 11402;
- the pH is in the range of 7 to 10;
- the dilutability is more than 20 times in demineralized water at 20 °C;
- the viscosity is below 100 mPa.s at 20 °C.

9. Use of the phenol-formaldehyde resin according to claim 8 for the preparation of a binder composition for mineral wool products.

10. A mineral wool product produced with the phenol-formaldehyde resin according to claim 8.

11. The use of mineral wool product of claim 10 for thermal or acoustic insulation purposes in buildings, conducts, electrical appliances, ships, aircrafts and spaceships.

12. Use of a phenol derivative or aniline derivative of the formula A as defined in claim 1 for reducing the content of free formaldehyde in a phenol-formaldehyde resin wherein the phenol-formaldehyde resin before and after the treatment with the phenol derivative or aniline derivative of the formula A has the following properties:
- the pH is in the range of 7 to 10;
- the dilutability is more than 20 times in demineralized water at 20 °C;
- the viscosity is below 100 mPa.s at 20 °C.

## Patentansprüche

1. Verfahren zum Reduzieren des Gehalts an freiem Formaldehyd in einem Phenol-Formaldehydharz, umfassend den Schritt, dass ein Phenol-Formaldehydharz, das als Ausgangsmaterial für das Phenol-Formaldehyd-Harz verwendet wird, in Kontakt gebracht wird mit zumindest einem Phenolderivat oder Anilinderivat der Formel A 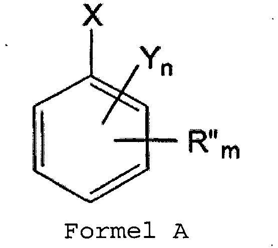 worin X ausgewählt ist aus der Liste, bestehend aus OH, OR, NH₂, NHR, NRR'; Y unabhängig ausgewählt ist aus der Liste, bestehend aus OH, OR, NH₂, NHR, NRR'; R, R' und R" gleiche oder unterschiedliche C₁₋₈H₂₋₁₆Z-Kohlenwasserstoffgruppen sind; Z unabhängig ausgewählt ist aus der Liste von H, OH, OR, NH₂, NHR, NRR'; n = 0 bis 4, m = 0 bis 4, mit der Maßgabe, dass n + m = 0 bis 4 ist; und Y/R" in den Positionen 2 bis 5 relativ zu X ist/sind, mit der Maßgabe, dass X nicht OH oder NH₂ ist, wenn n=m=0, worin
sowohl das Phenol-Formaldehydharz, das als Ausgangsmaterial verwendet wird, als auch das resultierende Phenol-Formaldehydharz, das nach dem Schritt des in Kontaktbringens des Ausgangsmaterials mit dem Phenolderivat oder Anilinderivat erhalten wird, folgende Eigenschaften aufweist: einen pH von 7 oder höher, Viskosität unterhalb 100 mPa·s bei 20°C und eine mehr als 20-fache Verdünnbarkeit in demineralisiertem Wasser,
wobei das Verfahren keinen Verfahrensschritt beinhaltet, bei dem die Temperatur über 40°C erhöht wird.

2. Verfahren gemäß Anspruch 1, worin X ausgewählt ist aus der Liste, bestehend aus OH und OR; Y unabhängig ausgewählt ist aus der Liste, bestehend aus OH und OR; R, R' und R" gleiche oder unterschiedliche C₁₋₈H₂₋₁₆Z-Kohlenwasserstoffgruppen sind; Z unabhängig ausgewählt ist aus der Liste von H, OH, OR, NH₂, NHR, NRR'; n = 0 bis 4, m = 0 bis 4, mit der Maßgabe, dass n + m = 0 bis 4 ist; und Y/R" in den Positionen 2 bis 5 relativ zum X ist/sind, mit der Maßgabe, dass X nicht OH ist, wenn n=m=0 ist.

3. Verfahren gemäß Anspruch 1 oder 2, worin das Phenolderivat ein oder mehrere ausgewählt aus Risorcinol, Hydrochinon, Kresol oder Katechol ist.

4. Verfahren gemäß einem der Ansprüche 1 bis 3, worin der Schritt des in Kontaktbringens des Phenol-Formaldehydharzes mit dem Phenolderivat oder Anilinderivat bei einer Temperatur von 20 bis 30°C durchgeführt wird.

5. Verfahren gemäß einem der vorhergehenden Ansprüche, worin die Zeit des Schritts, bei dem das Phenol-Formaldehydharz mit dem Phenolderivat oder Anilinderivat in Kontakt gebracht wird, 1 bis 180 Minuten beträgt.

6. Verfahren gemäß einem der vorhergehenden Ansprüche, worin die Menge an Phenolderivat oder Anilinderivat etwa 0,25 bis 2 mol des Phenolderivats oder Anilinderivats pro Mol an freiem Formaldehyd, das in dem Ausgangs-Phenol-Formaldehydharz vorliegt, ist.

7. Verfahren gemäß irgendeinem der vorhergehenden Ansprüche, worin das Verfahren einen zusätzlichen Schritt aufweist, bei dem das Phenol-Formaldehydharz mit einem Oxidationsmittel wie Wasserstoffperoxid, Ammoniumpersulfat, Natriumpercarbonat, Natriumperborat, Peressigsäure oder Perameisensäure behandelt wird.

8. Phenol-Formaldehydharz, modifiziert durch ein Phenolderivat oder Anilinderivat gemäß Formel A, **dadurch gekennzeichnet, dass**:
- der Gehalt an freiem Formaldehyd unterhalb 0,5 Gew.%, bestimmt durch ISO 11402, liegt,
- der pH im Bereich von 7 bis 10 ist;
- die Verdünnbarkeit in demineralisiertem Wasser bei 20°C mehr als 20-fach ist;
- die Viskosität unter 100 mPa·s bei 20°C ist.

9. Verwendung des Phenol-Formaldehydharzes gemäß Anspruch 8 zur Herstellung einer Bindemittelzusammensetzung für Mineralwolleprodukte.

10. Mineralwolleprodukt, hergestellt mit dem Phenol-Formaldehydharz gemäß Anspruch 8.

11. Verwendung des Mineralwolleproduktes von Anspruch 10 zu thermischen oder akustischen Isolierungszwecken in Gebäuden, Leitungen, elektrischen Vorrichtungen, Schiffen, Flugzeugen und Raumschiffen.

12. Verwendung eines Phenolderivats oder Anilinderivats der Formel A, wie in Anspruch 1 definiert, zur Reduzierung des Gehaltes an freiem Formaldehyd in einem Phenol-Formaldehydharz, worin das Phenol-Formaldehydharz vor und nach der Behandlung mit dem Phenolderivat oder Anilinderivat der Formel A die folgenden Eigenschaften aufweist:
- der pH ist im Bereich von 7 bis 10;
- die Verdünnbarkeit in demineralisiertem Wasser bei 20°C ist mehr als 20-fach;
- die Viskosität ist unter 100 mPa·s bei 20°C.

## Revendications

1. Procédé de réduction de la teneur en formaldéhyde libre dans une résine phénol-formaldéhyde, comprenant l'étape de mise en contact d'une résine phénol-formaldéhyde utilisée en tant que produit de départ résine phénol-formaldéhyde avec au moins un dérivé du phénol ou dérivé de l'aniline de formule A 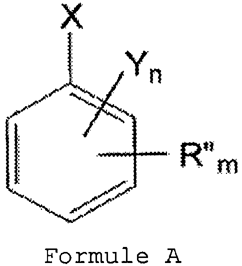 dans laquelle X est choisi dans la liste composée de OH, OR, NH₂, NHR, NRR' ; Y est indépendamment choisi dans la liste composée de OH, OR, NH₂, NHR, NRR' ; R, R' et R" sont des groupes hydrocarbonés C₁₋₈H₂₋₁₆Z identiques ou différents ; Z est indépendamment choisi dans la liste de H, OH, OR, NH₂, NHR, NRR' ; n = 0 à 4, m = 0 à 4, avec la condition que n + m vaut 0 à 4 ; et Y/R" est/sont en positions 2 à 5 par rapport à X, à condition que X ne soit pas OH ou NH₂ lorsque n = m = 0, dans lequel
la résine phénol-formaldéhyde utilisée en tant que produit de départ et la résine phénol-formaldéhyde résultante obtenue après ladite étape de mise en contact du produit de départ avec ledit dérivé du phénol ou dérivé de l'aniline ont toutes deux les caractéristiques suivantes : un pH supérieur ou égal à 7, une viscosité inférieure à 100 mPa.s à 20 °C, et une aptitude à la dilution de plus de 20 fois dans l'eau déminéralisée,
dans lequel le procédé ne comprend pas d'étape de traitement dans laquelle la température est augmentée au-dessus de 40 °C.

2. Procédé selon la revendication 1, dans lequel X est choisi dans la liste composée de OH et OR ; Y est indépendamment choisi dans la liste composée de OH et OR ; R, R' et R" sont des groupes hydrocarbonés C₁₋₈H₂₋₁₆Z identiques ou différents ; Z est indépendamment choisi dans la liste de H, OH, OR, NH₂, NHR, NRR' ; n = 0 à 4, m - 0 à 4, avec la condition que n + m vaut 0 à 4 ; et Y/R" est/sont en positions 2 à 5 par rapport à X, à condition que X ne soit pas OH lorsque n = m = 0.

3. Procédé selon la revendication 1 ou 2, dans lequel le dérivé du phénol est un ou plusieurs dérivés choisis parmi le résorcinol, l'hydroquinone, le crésol ou le catéchol.

4. Procédé selon l'une quelconque des revendications 1 à 3, dans lequel l'étape de mise en contact de ladite résine phénol-formaldéhyde avec ledit dérivé du phénol ou dérivé de l'aniline est réalisée à une température de 20 à 30 °C.

5. Procédé selon l'une quelconque des revendications précédentes, dans lequel la durée de l'étape de mise en contact de ladite résine phénol-formaldéhyde avec ledit dérivé du phénol ou dérivé de l'aniline est de 1 à 180 minutes.

6. Procédé selon l'une quelconque des revendications précédentes, dans lequel la quantité du dérivé du phénol ou dérivé de l'aniline est d'environ 0,25 à 2 moles de dérivé du phénol ou dérivé de l'aniline par mole de formaldéhyde libre présent dans la résine phénol-formaldéhyde de départ.

7. Procédé selon l'une quelconque des revendications précédentes, dans lequel le procédé contient une étape supplémentaire de traitement de la résine phénol-formaldéhyde avec un agent oxydant tel que le peroxyde d'hydrogène, le persulfate d'ammonium, le percarbonate de sodium, le perborate de sodium, l'acide peracétique ou l'acide performique.

8. Résine phénol-formaldéhyde modifiée par un dérivé du phénol ou dérivé de l'aniline de formule A, **caractérisée en ce que** :
- la teneur en formaldéhyde libre est inférieure à 0,5 % en poids, déterminée selon la norme ISO 11402 ;
- le pH est dans la plage allant de 7 à 10 ;
- l'aptitude à la dilution est supérieure à 20 fois dans l'eau déminéralisée à 20 °C ;
- la viscosité est inférieure à 100 mPa.s à 20 °C.

9. Utilisation de la résine phénol-formaldéhyde selon la revendication 8, pour la préparation d'une composition de liant pour des produits de laine minérale.

10. Produit de laine minérale préparé avec la résine phénol-formaldéhyde selon la revendication 8.

11. Utilisation du produit de laine minérale selon la revendication 10 à des fins d'isolation thermique ou acoustique dans des bâtiments, des conduites, des appareils électriques, des navires, des avions et des vaisseaux spatiaux.

12. Utilisation d'un dérivé du phénol ou dérivé de l'aniline de formule A telle que définie selon la revendication 1 pour réduire la teneur en formaldéhyde libre dans une résine phénol-formaldéhyde, dans laquelle la résine phénol-formaldéhyde avant et après le traitement avec le dérivé du phénol ou dérivé de l'aniline de formule A a les propriétés suivantes :
- le pH est dans la plage allant de 7 à 10 ;
- l'aptitude à la dilution est supérieure à 20 fois dans l'eau déminéralisée à 20 °C ;
- la viscosité est inférieure à 100 mPa.s à 20 °C.
